Europäisches Patentamt

**European Patent Office**

**Office européen des brevets**

(11) Publication number: **0 134 687**
**A2**

(12) # EUROPEAN PATENT APPLICATION

(21) Application number: **84305118.6**

(22) Date of filing: **27.07.84**

(51) Int. Cl.⁴: **A 23 L 3/00**
**A 23 B 7/144, C 12 H 1/00**
**B 65 D 83/14**

(30) Priority: **11.08.83 US 522838**

(43) Date of publication of application:
**20.03.85 Bulletin 85/12**

(84) Designated Contracting States:
**AT BE CH DE FR GB IT LI LU NL SE**

(71) Applicant: **Overleese, John J.**
**6518 113th N.E.**
**Kirkland Washington 98033(US)**

(71) Applicant: **Sherwood, John F.**
**4680 95th N.E.**
**Bellevue Washington 98004(US)**

(72) Inventor: **Overleese, John J.**
**6518 113th N.E.**
**Kirkland Washington 98033(US)**

(72) Inventor: **Sherwood, John F.**
**4680 95th N.E.**
**Bellevue Washington 98004(US)**

(74) Representative: **Rooney, Paul Blaise et al,**
**D.Young & Co. 10 Staple Inn**
**London WC1V 7RD(GB)**

(54) **Use of food aerosol propellant, via hand held aerosol spray container to preserve beverages such as wine and foods such as fruits.**

(57) Beverages and foods initially preserved and sold in containers (36, 42), after opening, which soon will deteriorate in taste and/or quality in the presence of oxygen in the air, if not initially fully consumed upon an initial serving, are preserved, as to portions left over, by covering the beverage surfaces and/or food surfaces with a layer of a food compatible, heavier than air, inert gas (39), supplied and positioned by using an aerosol propellant hand held can (22).

EP 0 134 687 A2

Croydon Printing Company Ltd.

USE OF FOOD AEROSOL PROPELLANT, VIA HAND HELD AEROSOL SPRAY
CONTAINER, TO PRESERVE BEVERAGES SUCH AS WINE, AND FOODS, SUCH
AS FRUITS, FOLLOWING THE INITIAL OPENING OF THEIR ORIGINAL
CONTAINERS"

Throughout the history of wine making, storing, serving, reuses, etc. it has always been known that wine must be kept free from oxygen per se and/or oxygen in surrounding air. If wine is exposed to air beyond a normal serving mean time, spoiling or turning of the wine starts and soon ruins the wine. At a winery, oxidation is prevented by keeping the tanks, casks, or holding containers full, and without any air space, or by the use of nitrogen gas to replace the air.

Also, wine in larger containers is sold in cardboard containers surrounding a plastic bag filled with wine. As the wine is consumed the plastic bag collapses, so no air enters to bring in the oxygen, thereby keeping the wine very tasteful until fully consumed.

The preservation of fruit and other foods by covering with a protective fluid is understood to have been undertaken in commercial food preparation and serving businesses. However, the meal time to meal time preservation of left over fruits in homes by using protective fluids to keep oxygen of the air away from surfaces of food is not believed to have been undertaken.

Therefore in respect to wine, and such fruits and other foods, left over wines are foods are often no longer good, when considered for a subsequent serving, and they are discarded, which is wasteful in all respects. Also in respect to what might be a leftover, the wine is consumed to avoid the loss and a person's overindulgence could be uncomfortable and/or dangerous, for example, in reference to carrying on activities such as driving.

There has continued to be a need, therefore for more convenient, compact, lower cost, handily used, equipment, to practice the method of preserving beverages and foods, by surrounding wine level and food surfaces with an inert, food compatible, heavier than air, gas, until the balance of an on hand quantity is consumed at subsequent serving times.

A method and equipment are provided to preserve beverages, such as wine, and foods, such as fruits, following the initial opening of their original containers, when they are not fully consumed at the first serving time and must be preserved until the next serving time. A food aerosol propellant is used, via a hand held aerosol spray container, to displace the air and its carried oxygen, from about the otherwise exposed surfaces of the beverage and/or food, so the heavier than air inert food compatible gas remains positioned over such surfaces until the next serving time.

Conventional aerosol containers are utilized, for example, such as a drawn aluminium container, having a thread valve opening and known as a K-28 series container of a size of approximately two inches in diameter and five inches in length. Of selectable inert food compatible heavier than air gases, the Freon fluorocarbon compound, Freon 115, i.e. $CClF_2 -CH_3$, known as an F.D.A. accepted food propellant, is currently preferred as the liquid held under pressure within the conventional aerosol container. The latter is preferably equipped with an extended passageway, i.e. tube, to aid in directing the inert food compatible heavier than air, gas into contact with the surfaces of the beverages and foods, thereby displacing the air and its carried oxygen, avoding oxidation, which otherwise creates the spoiling or turning effect of the beverages and/or foods.

This method and equipment now provides a practical, comparatively low cost way of saving beverages and foods, once opened, until their next serving time, which may be undertaken in homes, while travelling, and/or in operating smaller businesses, where presently the other available argon or nitrogen gas, or like heavier, higher cost, and/or less convenient methods and equipment are not installed.

Single persons, couples, and/or small groups of persons, may partake of less than bottle size quantities of wines, for example, without feeling the pressures to over consume, or without contemplating the potential waste of pouring out spoiled or turned wine. They now conveniently inject the inert food compatible heavier than air gas into the wine bottle by using the aerosol propellant hand held can, to displace the air and its carried oxygen and recap the bottle until the next serving time, when they will find the wine as tasteful as it was when originally opened for the first serving.

The preferred embodiments of the method and equipment used to continue the preservation of beverages and/or foods between serving times by covering their otherwise air with its oxygen exposed surfaces with an inert food compatible heavier than air gas supplied by using an aerosol propellant hand held can are illustrated in the accompanying drawings, wherein:

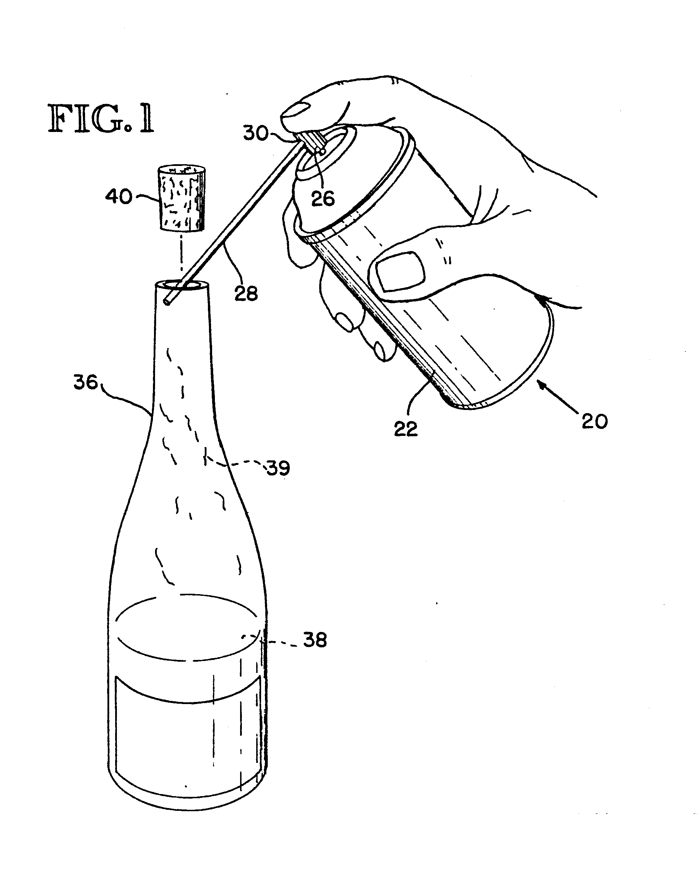

Fig 1 is a perspective view of a partially filled beverage bottle, such as a wine bottle, with an aerosol propellant hand held can positioned so its extended passageway is inserted into the neck of the bottle to direct the inert food compatible heavier than air gas down into the bottle to displace the air and its carried oxygen from any contact with the surface of the remaining wine in the bottle, until the next serving time;

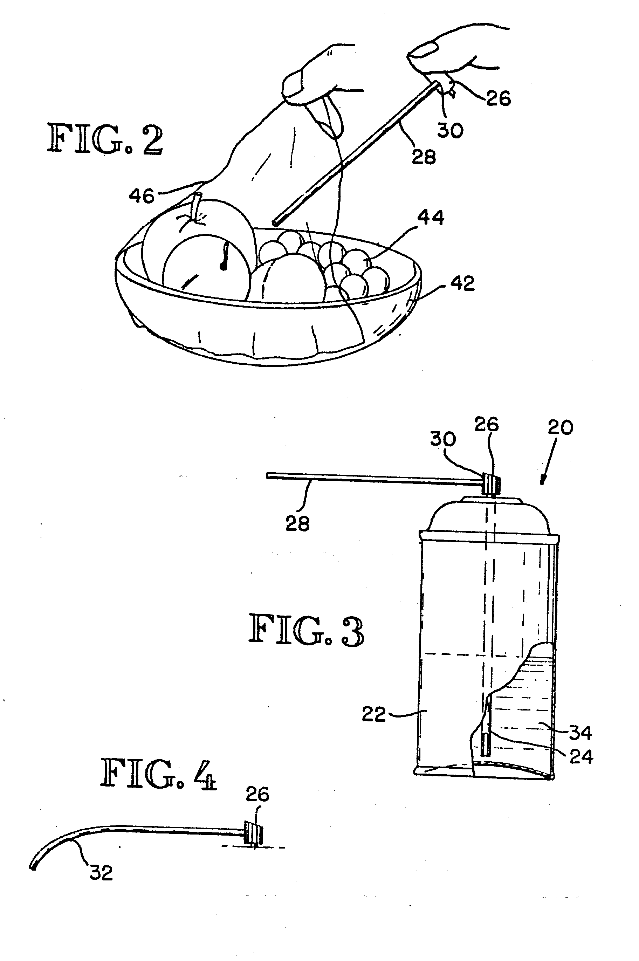

Fig 2 is a perspective view of a bowl of food, such as fruit, with an aerosol propellant hand held can positioned so its extended passageway is directed over the exposed surfaces of the fruit to direct the inert food compatible heavier than air gas down, around, and over the otherwise air and oxygen exposed surfaces of the fruit to displace the air until the next serving time;

Fig 3 is a schematic cross-sectional view of a conventional aerosol propellant can having a tube fitted to the spray nozzle thereof to aid in the placement of the iert food compatible heavier than air gas over the surfaces of beverages and/or foods; and

Fig 4 is a schematic view of another tube formed to provide a directional change passageway to more conveniently direct the inert food compatible heavier than air gas down into the entry of a bottle.

There previously has not been any known method or equipment available to the home owner, an individual, a small group, or the staff of a small business or other organization, which would enable them to adequately, conveniently, a comparatively low cost, preserve beverages and/or foods, such as wines and fruits, between their servings, following the opening of their original sealed containers. Now there are methods and equipment 20, as illustrated in the figs 1 through 4, which assist them in displacing the air and its carried oxygen from the exposed surfaces of beverages and/or foods, to avoid oxidation, otherwise causing, for example, the spoiling or turning of wine, and/or the darkening of fruit.

As illustrated in Figs 1 through 4, the equipment 20 is a conventional aerosol propellant hand held can 22 equipped with central depending interior tube 24, projecting upwardly from near the bottom of the can to a distance above the top of the can 22. A depressable valve 26 is positioned over the interior tube 24. Optionally, a directional tube 28 is inserted into the otherwise spray opening 30 of the valve 26. Or a directional tube 32 may be curved, as shown in Fig 4, for the convenience of injecting the propellant fluid into a container. A preferred aerosol container is drawn from aluminium to a two inch diameter and five inches long overall size, and equipped with threaded valves, designated as K-28 series can 22.

The compressed liquid 34 in the erosol can 22 is an inert food compatible heavier than air fluid which displaces the air and its oxygen from around the otherwise exposed surfaces of the beverages and/or foods. Such a fluid is the Freon fluorocarbon compound known as Freon 115. i.e., $CClF_2 - CF_3$.

The equipment 20 is used via the methods illustrated in figures 1 and 2. After a wine serving time is completed, as shown in Fig 1, the aerosol can is hand positioned above a bottle 36 so the directional tube 28 enters into the interior of the bottle 36. Thereafter, the valve 26 is depressed and the inert food compatible, heavier than air fluid, then a gas 39, fills the volume above the surface of the wine 38, displacing the air and its oxygen from any contact with the otherwise exposed surface of the wine 38. The bottle 36 is thereafter closed again with the cork 40, until the next serving time, and the taste and the quality of the wine are preserved, having been kept free of oxidation effects.

A similar preserving procedure is followed in preserving food, for example, fruit 44 in a bowl 42, as illustrated in fig 2. A Saran wrap 46 is partially placed about a bowl and using the equipment 20, the valve 26 is depressed so the inert food compatible hevier than air gas 39 will be directed through the tube 28 via the spray opening 30 over the fruit 44 and below the Saran wrap 46. Thereafter, the fruit is completely covered with the inert gas 39 and the bowl 42 is completely covered with the Saran wrap 46, and the taste, appearance, and quality of the fruit are preserved until the next serving time, having been kept free of oxidation effects.

By using the illustrated equipment 20, or comparable equipment with respect to the functions to be performed, and by following the methods, or comparable methods, with respect to like objectives, aerosol propellants are utilized, which are inert, food compatible, and heavier than air, to preserve beverages and foods, by displacing air and its oxygen from around their respective surfaces, thereby avoiding oxidation, and preserving their taste and quality until the next serving time.

CLAIMS:

1.      A method of preserving the taste and quality of beverges and/or foods, after the initial opening of their original containers, between serving times, until they are fully consumed, charactrised by the steps of :-

a)     placing an inert food compatible liquid (34) in an aerosol container (22) to serve as a gas propellant when a valve (26) of the aerosol container (22) is selectably opened; and

b)     directing propelled inert food compatible gas (39) emitting from the depressed valve (26) of the aerosol container (22) over the surfaces of beverages and/or foods, where necessary, to replace air with the heavier than air inert food compatible gas, to thereby avoid any deterioration of the taste and quality of the beverage and/or food by the presence of oxygen in the air, until a subsequent serving time, following such procedures until the beverage and/or foods are completely consumed.

2.      A method as claimed in  claim 1, whereby in directing the propelled inert food compatible gas (39) emitted from the valve (26) of the aerosol container (22), an extended gas flow directional passageway structure (28) is employed to insure the direct placement of the inert food compatible gas (39) over the otherwise air exposed surfaces of the beverages and/or foods.

3.      A method as claimed in claim 1 or claim 2, wherein the inert food compatible liquid (34) is a Freon flurocarbon compound.

4.      A method as claimed in claim 3, wherein the inert food compatible liquid (34) is the food propellant known as Freon 115.

5. Equipment for use in preserving the taste and quality of beverages and/or foods, after the initial opening of their original containers, between serving times, until they are fully consumed, characterised by comprising a fully equipped aerosol container (22) charged with an inert food compatible liquid (34), which upon discharge, becomes a heavier than air gas (39) for propelled placement over the otherwise air exposed surfaces of beverages and/or foods to prevent the oxygen of the air from reaching the surfaces of beverages and/or foods during their temporary storage until a following serving time.

6. Equipment as claimed in claim 5, having an extended passageway structure (28) attached to the aerosol container (22) specifically to direct the inert food compatible gas to the surfaces of the beverages and/or foods.

7. Equipment as claimed in claim 5 or claim 6, wherein the inert food compatible liquid (34) confined in the aerosol container (22) under pressure is a Freon fluorocarbon compound.

8. Equipment as claimed in claim 7, wherein the inert food compatible liquid (34) is Freon 115, i.e. $CClF_2CF_3$.

9. Equipment as claimed in any one of claims 5 to 8, including a container (36, 42), the original or a substituted one, to confine the respective beverage and/or food, not fully consumed at the first serving, until the following serving time, thereby to position the heavier than air inert food compatible gas over the otherwise oxygen, via air, exposed surfaces of the beverage and/or food.

10. Equipment as claimed in claim 9, including a seal for the respective container (36, 42) to insure the heavier than air inert food compatible gas will remain over the otherwise oxygen, via air, exposed surfaces of the respective beverage and/or food during the storage time between serving times.

0134687

FIG. 1

0134687

FIG. 2

FIG. 3

FIG. 4